# EUROPEAN PATENT SPECIFICATION

(11) **EP 0 598 570 B1**
(45) Date of publication and mention of the grant of the patent: **19.01.2000**
(21) Application number: 93309081.3
(22) Date of filing: 12.11.1993
(51) Int. Cl.: G06F 12/08

(54) **Microprocessor comprising region configuration system and method for controlling memory subsystem operations by address region**
Mikroprozessor mit Adressbereichkonfigurationsystem und Verfahren zur Steuerung von Speichersystemoperationen mittels Adressbereichen
Microprocesseur comprenant un système de configuration de régions et procédé pour contrôler les opérations du sous-système mémoire par régions d'adresses

(30) Priority: 13.11.1992 US 975804
(43) Date of publication of application: 25.05.1994
(60) Divisional application: 98122676.4
(73) Proprietor: NATIONAL SEMICONDUCTOR CORPORATION, Richardson, Texas (US)
(72) Inventor: Bluhm, Mark, Plano, Texas 75024 (US); Garibay, JR. Raul A, Richardson, Texas 75080 (US); Duschatko, Douglas Ewing, Plano, Texas 75075 (US); Herubin, Margaret R., Coppell, Texas 75019 (US); Martinez, Marvin Wayne Jr., Plano, Texas 75023 (US); Quattromani, Marc A., Allen, Texas 75002 (US)
(74) Representative: Harris, Ian Richard

(56) References cited:
- EP-A- 0 175 398
- EP-A- 0 400 840
- EP-A- 0 525 308
- WO-A-92/00590
- DE-A- 3 502 147
- IBM TECHNICAL DISCLOSURE BULLETIN vol. 33, no. 9 , February 1991 , NEW YORK US pages 434 - 435 'Programmable cache decoder'
- IBM TECHNICAL DISCLOSURE BULLETIN vol. 33, no. 6B , November 1990 , NEW YORK US pages 455 - 458 'Programmable main-storage card map'

## Description

The invention relates generally to integrated circuits, and more particularly, relates to a microprocessor including an address region configuration system and method for controlling memory subsystem operations by region of address space. In an exemplary embodiment, the address region configuration system is used in a 486-type microprocessor to optimize performance of the cache/memory subsystem.

Memory subsystem performance can be optimized by the use of such operations as weak write ordering, write gathering, and inhibiting bus LOCKing.

Without limiting the scope of the invention, this background information is provided in the context of a specific problem to which the invention has application: various performance optimizing techniques developed for memory subsystems cannot be reliably used in certain regions of the memory map.

With strong write ordering, the processor guarantees that the order of writes seen by the CPU core (execution pipeline) when referencing the cache is identical under all circumstances to the order of writes seen on the processor's external bus. In weak write ordering, the processor core is permitted to update its internal cache with write data before that write data is guaranteed to have been accepted by the external bus. Under certain external snoop with invalidate conditions, the write data in the cache may appear on the bus before data from an earlier issued write, which has the effect of changing the order of the writes as far as the external bus is concerned. In most situations, this condition is not important and since weak write ordering allows for some performance optimizations, weak write ordering is usually advantageous.

Under write gathering, sequential writes to the same word may be gathered into a single write. For example, for a 64-bit word, up to eight bytes may be gathered into a single write which should significantly reduce bus traffic, particularly if the processor is in write-through cache mode. Write gathering has a lesser, but still positive, effect in write-back mode.

A microprocessor requesting a locked memory access has exclusive control of the bus during the memory access. However, a locked operation requires a considerable number of clocks to synchronize the write buffers and force the read and the write of the locked read-modify-write to the external bus. Since locks are not necessary except in the shared areas of the memory map for multiprocessor systems, they can be ignored to avoid the associated performance penalty.

However, implementation of these and other performance optimizations is problematic in many computer systems (e.g. personal computer systems, such as IBM PC or IBM PC clone computers) because they should not be used in certain regions of the memory map. For example, weak write ordering and write gathering cannot be reliably used in memory mapped I/O regions. Also, even in multiprocessing systems where the use of LOCK is required in shared regions of the memory map, these regions are relatively small (such that using LOCK for all instructions requesting LOCK would still result in an unnecessary performance penalty).

Accordingly, one object of the invention is to optimise performance of the memory subsystem of a computer through the use of operational functions, even though the functions may be not appropriate for certain regions of memory address space.

US Patent US-A-5 140 681 (Uchiyama et al) discloses a multi-processing system in which two processors share a main memory. Region discrimination of the memory map establishes write-through regions (shared by the processors) and copy-back regions (private to the respective processors) of the memory map. A copy-back region is defined by U and L registers that set upper and lower bounds. The write-through regions are the regions above and below the copy-back regions. Address comparison with the U and L registers determines whether a memory access is directed to the copy-back or write-through regions.

US Patent US-A-5 148 526 (Nishimukai et al), which is equivalent to German Patent Application Publication No. DE-A-3 502 147, discloses a processing system in which a cache control system establishes contiguous non-cacheable regions of fixed size for memory mapped I/O control registers and for logical and physical address tables. Also, the processing system has a common memory comprising two regions of variable size which share a common boundary. One of the variable size regions is non-cacheable and is used as a shared communication region between two microprocessors of the processing system, while the other variable size region is cacheable and stores instructions and data to be processed by one of the microprocessors.

IBM Technical Disclosure Bulletin, vol. 33, No. 9, February 1991, "PROGRAMMABLE CACHE DECODER", discloses a technique which allows a computer operating system to control the areas of memory it does not want to be cached. A number of address range registers is provided that corresponds to the number of ranges that are to be programmed as non-cacheable. The number of bits in the address range register depends on the granularity of the area to be decoded. A comparator enable register contains an enable bit for each range register in the system. When the address range registers are programmed, the bit corresponding to that register is enabled. A set of comparators trap on the addresses that are non-cacheable. If there is a match between the address, the address range registers and the address comparator is enabled, the access is defined as a non-cacheable access.

European Patent Application Publication No. EP-A-0 175 398 discloses a data processing system having a processor, a memory device and a memory access controller. The memory device comprises memory portions having memory subportions. The portions and subportions are identified by first and second descriptors, respectively. The descriptors may comprise attribute and/or permission bits. The memory access controller has a translation unit for translating a virtual address generated by the processor into a physical address. Bits originating from addressed first and second descriptors are logically combined to offer the possibility of determining an attribute and/or permission for an individual memory device subportion.

WO 92/00590 describes a mechanism for setting up memory regions in the context of a cache controller external to a processor. In particular, this document describes an external cache and cache controller for use with a microprocessor such as an Intel 80386 or 80486 microprocessor. The cache controller defines a plurality of memory regions selectively associated with a Cacheable Write Protected (CWP) region attribute or a Non-Cacheable Access (NCA) region attribute, but not both. The cache controller checks the physical address of a write received from the microprocessor against region protection registers. If the physical address is a non-cacheable region, the write data from the microprocessor bypasses the cache mechanism with a BYPASS signal asserted, and the cache controller writes write data received from the processor to memory. Non-cacheable read data also BYPASSES the cache mechanism. This document does not address write gathering.

According to a first aspect of the present invention there is provided a microprocessor including a memory control system for issuing physical memory addresses to control access to a memory external to said microprocessor via a bus external to said microprocessor, and a bus interface for providing access to said external bus, the memory control system comprising:
memory region means for defining a plurality of memory regions for said external memory, a said memory region being definable independently of other memory regions as to physical memory base address and block size and having associated plural-mode operational functions, said plural-mode operational functions having operational function attributes with values selectable for defining modes of said plural-mode operational functions; and
access control signal determining means for determining whether a current physical memory address is in the address space of one or more of said memory regions and, if so, for outputting access control signals for use by said microprocessor to initiate access to said external memory, said access control signals including attribute values derived from the respective operational function attribute values for said plural mode operational functions associated with said one memory region or each of said memory regions containing the current physical address and permitting non-write protected, non-cacheable external memory access with write gathering.

According to a second aspect of the present invention there is provided a method of controlling access by a microprocessor in a computer system to a memory external of the microprocessor via a bus external to said microprocessor, the method comprising:
(a) defining a plurality of memory regions for said external memory, a said memory region being definable independently of other memory regions as to physical memory base address and block size and having associated plural-mode operational functions, said plural-mode operational functions having operational function attributes with values selectable for defining modes of said plural-mode operational functions; and
(b) determining, in an access control signal determining means, whether a current physical memory address is in the address space of one or more of said memory regions and, if so, outputting access control signals for use by said microprocessor to initiate access to said external memory, said access control signals including attribute values derived from the respective operational function attribute values for said plural mode operational functions associated with said one memory region or each of said memory regions containing the current physical address, wherein said access control signal generating means permits non-write protected, non-cacheable external memory access with write gathering.

In one embodiment of the invention an address region configuration system includes region configuration registers which are used to define (a) regions of address space, and (b) the operational functions that will apply in those regions.

In one aspect of the invention, a method of controlling memory access by a controller includes defining a plurality of memory regions comprising all or part of the address space of the processor and specifying operational functions for each region. The memory control system determines whether a current address is contained in one or more memory regions and generates control signals responsive to the specified operational functions for each region which contains the current address. A memory access is performed responsive to the control signals.

In an exemplary embodiment of the invention, information relating to the memory region definitions and attributes associated with each operational function are stored in a register file including first and second sets of registers. Comparators are coupled to respective registers in the first set to determine whether a current address is contained within one or more memory regions defined in the respective registers. If so, the attributes for the memory region are passed by an associated pass circuit to output attribute bit(s) from an associated register in the second set corresponding to a memory region. Since an address may be covered by more than one memory region, logic circuits are used to determine which attributes are used to control the memory access. In one embodiment, a NO_LOCK signal is provided to issue all bus cycles (except page table accesses) with the LOCK# negated.

The technical advantages of an embodiment of the invention include the following. Operational function modes, such as caching, write gathering, write ordering, and locking, may be selectively used or not used in specified memory regions to enhance performance, without affecting reliable system performance. The NO_LOCK signal, described above, can significantly increase memory access speed if locking is not necessary to prevent errors.

For a more complete understanding of the invention, and for further features and advantages, reference is now made to the detailed d escription of an exemplary embodiment of the invention, together with the accompanying drawings, it being understood that modifications or alternative embodiments are possible within the scope of the invention. In the drawings:
Figure 1a illustrates a block diagram of a first general processor architecture;
Figure 1b illustrates a block diagram of a second general processor architecture; and
Figure 2 illustrates a block diagram of a preferred embodiment of region configuration system.

The detailed description of an exemplary embodiment of the address region configuration method and system is organized as follows:
1. Memory Subsystem
2. Region Configuration System
   2.1. Cache Configuration Registers
   2.2. Region Configuration Registers
   2.3. Mode Region Registers
3. Cache/Memory Operational Functions
   3.1. Weak Write Ordering
   3.2. Weak Locks
   3.3. No Lock
   3.4. Write Gathering
   3.5. Other Functions
4. Conclusion

This organizational table, and the corresponding headings used in this detailed description, are provided for convenience of reference only.

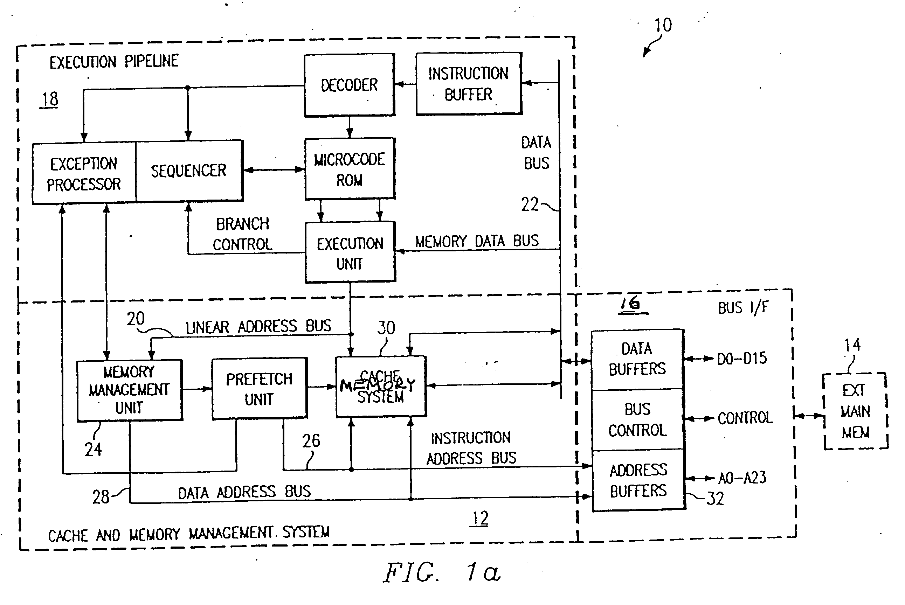

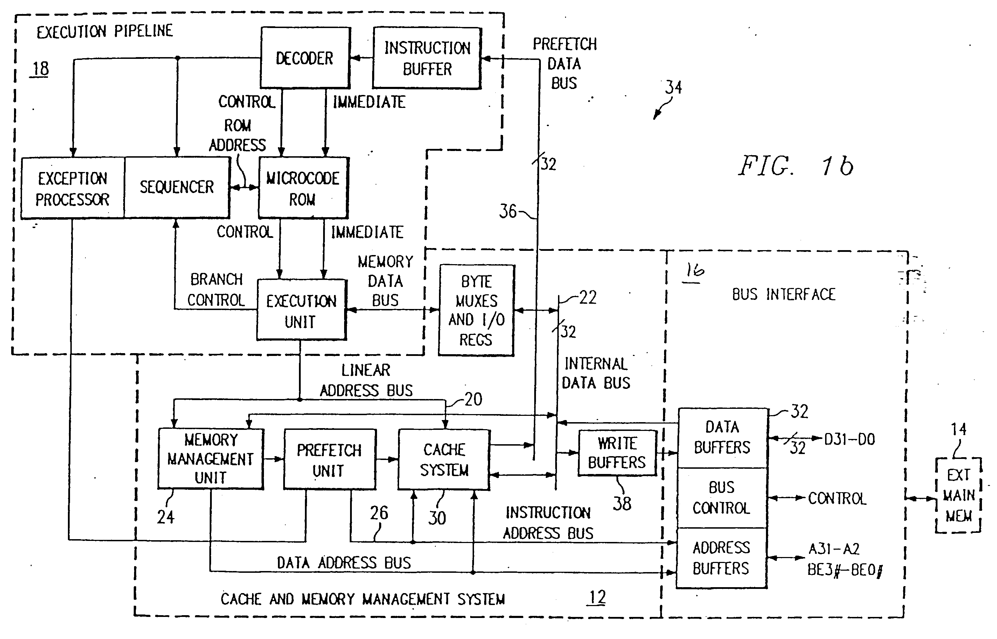

The present invention is discussed in connection with exemplary microprocessor systems shown in Figures 1a-b, compatible with 386- and 486- bus architectures, respectively, which together with relevant signal descriptions are described in greater detail in Agarwal, Rakesh K., 80 x 86 Architecture and Programming, Prentice-Hall, 1991. The invention described and claimed herein, however, is adaptable to any processor architecture, as would be known to one skilled in the art.

### 1. Memory Subsystem

Figure 1a illustrates a first exemplary implementation of a microprocessor in which a region memory controller embodying the invention may be employed. The microprocessor chip is generally designated by reference numeral 10, and includes a cache and memory management system 12. The microprocessor 10 is coupled to an external main memory 14 (a random access memory) via bus interface 16. Execution pipeline 18 decodes and executes instructions. The execution pipeline 18 outputs linear (virtual) addresses over an internal linear address bus 20, while data transfers occur over an internal data bus 22.

The cache and memory management system 12 includes a memory management unit (MMU) 24. The MMU converts linear addresses to physical addresses, which output over separate internal instruction and data address buses 26 and 28. The physical addresses are provided to both (a) to the cache memory system 30, and (b) to address buffers 32 which interface to the external address bus A0-23.

The cache memory system includes a cache and a cache control system. The cache control system receives physical addresses off the internal instruction and data address buses 26 and 28 (together with the lower order bits of the linear address, which are not translated in the MMU). In addition, the cache control system is able to receive data from the internal data bus 22.

The exemplary cache is a 1 Kbyte unified (instruction and data) write-through cache with 256 cache lines of 4 bytes each, corresponding to a 32-bit internal data path. The cache can be organized as either direct mapped or two-way set associative. When organized as two-way set associative, the cache is separated into two banks of 128 cache lines. The organization and operation of the cache is conventional.

Figure 1b illustrates a second exemplary implementation of a microprocessor, generally designated by reference numeral 34, to which a region memory controller embodying the invention may be adapted. The general architecture of microprocessor 34 is substantially the same as that shown in Figure 1b, with addition of the separate prefetch bus 36 and write buffer circuitry 38. Further, some of the features of the various blocks of the microprocessor 34 are enhanced. For example, the exemplary cache of Figure 1b is a 2 Kbyte unified (instruction and data) cache with 128 cache lines of 8 bytes each. The caching protocol may be either write-through or write-back, as configured by the system programmer. The cache is organized as four-way set associative.

In each microprocessor shown in Figure 1a and Figure 1b, the cache and memory management system is responsible for communication with the microprocessor's memory system, which includes, but is not limited to, the cache and the main memory (or other internal or external memory, such as an external cache). The memory region configuration system, described hereinbelow, allows for efficient use of operational functions by selecting a mode for each operational function in defined regions of memory.

### 2. Region Configuration System

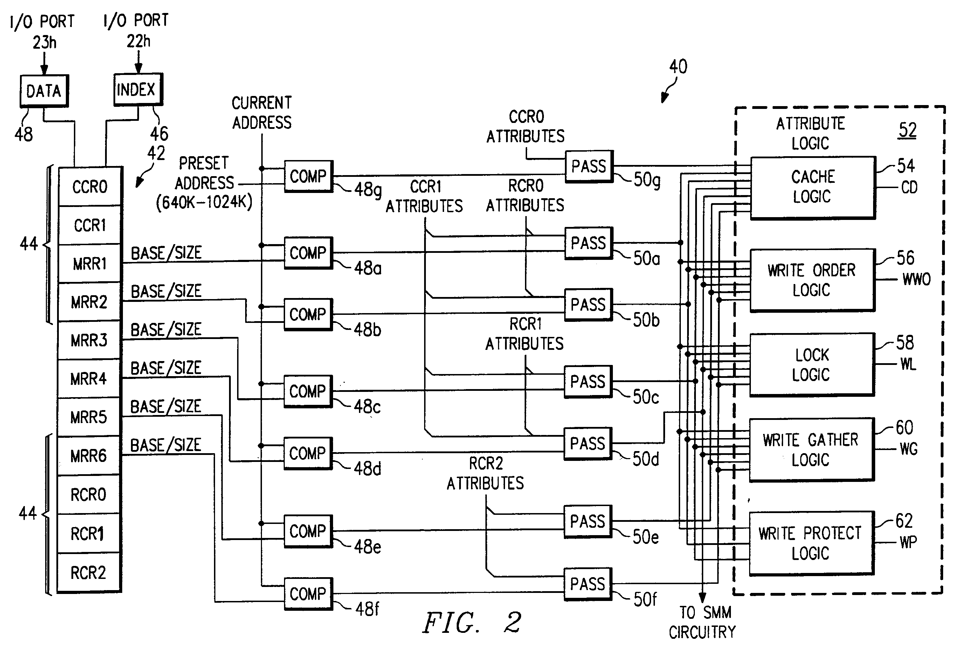

Figure 2 illustrates a block diagram of a memory region configuration system 40 that may be incorporated in the cache and memory management system 12. A register file 42 comprises a plurality of control registers 44; relevant control registers are described in connection with Tables 1 - 4 below. Briefly, registers CCR0 and CCR1 contain control information for the cache system. Mode region registers MRR1-MRR6 store data to define a starting address and a block size for six respective regions of the addressable memory space. Region configuration registers RCR0 - RCR2 store data to define operational function attributes for each of the regions (each of these registers contains a set of attributes for each of two regions defined by the mode region registers). The attributes for each region define the selected mode (such as on/off, weak/strong) for the operational functions in that region. In the illustrated embodiment, each register RCR0-RCR2 stores four operational function attributes for each of its two regions: (1) whether the region is non-cacheable, (2) whether the region is weakly write ordered, (3) whether the region has weak locks, and (4) whether write gathering can be performed on the region.

Cache control information is written into the register file 42 using I/O ports 22h and 23h. Access to the registers 44 is achieved by writing the address (referred to as the index) of the register to I/O port 22h, with interface to the internal data bus being provided by an index register 46. Data is then written or read from the specified cache register through I/O port 23h, with interface to the internal data bus being provided by a data register 48.

Each I/O port 23h operation must be preceded by an I/O port 22h operation, otherwise the second and later I/O port 23h operation will be directed off-chip and not affect stored control information. Access to I/O port 22h with an index outside of the address range assigned to the register file 42 will result in external bus cycles and will not affect any control information stored in the on-chip registers 44.

The starting address (base) and block size information from registers MRR1-MRR6 is coupled to respective comparators 48a-f (see Tables 3-4). Comparators 48a-f also receive the current address being accessed. Each comparator 48a-f determines whether the current address is contained in the address space defined by the respective mode region register. If so, an appropriate signal is output from the comparator. Comparator 48g receives a predetermined address (640K - 1024K), rather than output from an MRR.

The output of each comparator 48a-g is coupled to a respective pass circuit 50a-g. Each pass circuit 50a-f also receives attribute information from the region configuration registers RCR0-RCR2. Pass circuits 50a-d also receive information from register CCR1. If the output of the respective comparator indicates that the current address is in the address space of the corresponding region, then the attributes are passed to the output of that pass circuit.

The outputs of the pass circuits are coupled to attribute logic 52, comprising cache logic 54, write order logic 56, lock logic 58, write gathering logic 60 and write protect logic 62. The attribute logic determines the value of the control signals CD (cache disable), WWO (weak write ordering), WL (weak locking), WG (write gathering) and WP (write protect) output from the attribute logic 52. These control signals are used by the microprocessor to control the operational functions in known manner.

Since the regions defined by registers MRR1-MRR6 may have overlapping address spaces, the attribute logic determines which region's attributes control for each operational function. In the preferred embodiment, the most restrictive of each mode is used. In connection with Table 2 below, the "0" settings are the most restrictive for those attributes independent of cacheability. Overlapping regions allow one region to set a large address space (or the entire address space of the microprocessor) to permissive modes (settings equal to "1"), with the other regions defining more prohibitive areas of the larger permissive region. Alternatively, bits defining default modes for the microprocessor's address space could be stored in a register, and could be modified by the memory regions. In this embodiment, the default attribute bits could pass directly to attribute logic 52.

### 2.1. Cache Configuration Registers

Pertinent bits of the cache control registers CCR0 and CCR1 are described in Table 1.

**TABLE 1**

| CCR0 and CCR1 | | | | |
|---|---|---|---|---|
| Register Index | Register Index | Bit | Description | Reset |
| CCRO | COh | 1 | NC1:if=1, sets 640KB to 1MB region as non-cacheable (NC) | 0 |
| CCR1 | C1h | 4 | WP1: if=1, MRR1 defines a write protected region. = 0 does not mean the region is non-cacheable. | 0 |
| | | 5 | WP2: if=1, MRR2 defines a write protected region. | 0 |
| | | 6 | WP3: if=1, MRR3 defines a write protected region. | 0 |
| | | 7 | SM4: if=1, MRR4 defines a system management memory region. | 0 |

### 2.2. Region Configuration Registers

Region configuration registers RCR0 through RCR2 are described in Table2.

**TABLE 2**

| REGION CONFIGURATION REGISTERS (RCR) | | | | |
|---|---|---|---|---|
| Register Index | Register Index | Bit | Description | Reset |
| RCRO | DOh | 0 | CD1: if=1, Mode Region 1 is non-cacheable. | 0 |
| | | 1 | WWO1: if=1, Mode Region 1 is weakly write ordered. | 0 |
| | | 2 | WL1: if=1, Mode Region 1 has weak locks. | 0 |
| | | 3 | WG1: if=1, write gathering can be performed on Mode Region 1. | 0 |
| | | 4 | CD2: if=1, Mode Region 2 is non-cacheable. | 0 |
| | | 5 | WW02: if=1, Mode Region 2 is weakly write ordered. | 0 |
| | | 6 | WL2: if=1, Mode Region 2 has weak locks. | 0 |
| | | 7 | WG2: if=1, write gathering can be performed on Mode Region 2. | 0 |
| RCR1 | D1h | 0 | CD3: if=1, Mode Region 3 is non-cacheable. | 0 |
| | | 1 | WWO3: if=1, Mode Region 3 is weakly write ordered. | 0 |
| | | 2 | WL3: if=1, Mode Region 3 has weak locks. | 0 |
| | | 3 | WG3: if=1, write gathering can be performed on Mode Region 3. | 0 |
| | | 4 | CD4: if=1, Mode Region 4 is non-cacheable. | 0 |
| | | 5 | WW04: if=1, Mode Region 4 is weakly write ordered. | 0 |
| | | 6 | WL4: if=1, Mode Region 4 has weak locks. | 0 |
| | | 7 | WG4: if=1, write gathering can be performed on Mode Region 4. | 0 |
| RCR2 | D2h | 0 | CD5: if=1, Mode Region 5 is non-cacheable. | 0 |
| | | 1 | WWO5: if=1, Mode Region 5 is weakly write ordered. | 0 |
| | | 2 | WL5: if=1, Mode Region 5 has weak locks. | 0 |
| | | 3 | WG5: if=1, write gathering can be performed on Mode Region 5. | 0 |
| | | 4 | CD6: if=1, Mode Region 6 is non-cacheable. | 0 |
| | | 5 | WW06: if=1, Mode Region 6 is weakly write ordered. | 0 |
| | | 6 | WL6: if=1, Mode Region 6 has weak locks. | 0 |
| | | 7 | WG6: if=1, write gathering can be performed on Mode Region 6. | 0 |

### 2.3. Mode Region Registers

Mode region registers MRR1 through MRR6 are described in Table 3, with block sizes defined in Table 4. While Tables 3 and 4 describe one implementation of defining memory regions, other methods of defining regions of memory could also be used, such as storing arbitrary starting and ending addresses for each region, along with appropriate changes in the logic of comparators 48a-g. Any memory region can be disabled by setting the block size to zero bytes, as shown in Table 4.

**TABLE 3**

| Mode Region Registers (MRR) | | | | |
|---|---|---|---|---|
| Register Index | Register Index | Bit | Description | Reset |
| MRR1 | C4h | 7-0 | Address bit 31:24 of Region 1 starting address | 0 |
| | C5h | 7-0 | Address bit 23:16 of Region 1 starting address | 0 |
| | C6h | 7-4 | Address bit 15:12 of Region 1 starting address | 0 |
| | | 3-0 | Region 1 Block Size (See Block Size Table 4) | 0 |
| MRR2 | C7h | 7-0 | Address bit 31:24 of Region 2 starting address | 0 |
| | C8h | 7-0 | Address bit 23:16 of Region 2 starting address | 0 |
| | C9h | 7-4 | Address bit 15:12 of Region 2 starting address | 0 |
| | | 3-0 | Region 1 Block Size (See Block Size Table 4) | 0 |
| MRR3 | CAh | 7-0 | Address bit 31:24 of Region 3 starting address | 0 |
| | CBh | 7-0 | Address bit 23:16 of Region 3 starting address | 0 |
| | CCh | 7-4 | Address bit 15:12 of Region 3 starting address | 0 |
| | | 3-0 | Region 1 Block Size (See Block Table 4) | 0 |
| MRR4 | CDh | 7-0 | Address bit 31:24 of Region 4 starting address | 0 |
| | CEh | 7-0 | Address bit 23:16 of Region 4 starting address | 0 |
| | CFh | 7-4 | Address bit 15:12 of Region 4 starting address | 0 |
| | | 3-0 | Region 1 Block Size (See Block Size Table 4) | 0 |
| MRR5 | D4h | 7-0 | Address bit 31:24 of Region 5 starting address | 0 |
| | D5h | 7-0 | Address bit 23:16 of Region 5 starting address | 0 |
| | D6h | 7-4 | Address bit 15:12 of Region 5 starting address | 0 |
| | | 3-0 | Region 1 Block Size (See Block Size Table 4) | 0 |
| MRR6 | D7h | 7-0 | Address bit 31:24 of Region 6 starting address | 0 |
| | D8h | 7-0 | Address bit 23:16 of Region 6 starting address | 0 |
| | D9h | 7-4 | Address bit 15:12 of Region 6 starting address | 0 |
| | | 3-0 | Region 1 Block Size (See Block Size Table 4) | 0 |

**TABLE 4**

| Block Size Encoding for Mode Regions | | | |
|---|---|---|---|
| VALUE | Region Size | VALUE | Region Size |
| 0000 | Disabled | 1000 | 512KB |
| 0001 | 4KB | 1001 | 1MB |
| 0010 | 8KB | 1010 | 2MB |
| 0011 | 16KB | 1011 | 4MB |
| 0100 | 32KB | 1100 | 4MB |
| 0101 | 64KB | 1101 | 16MB |
| 0110 | 128KB | 1110 | 32MB |
| 0111 | 256KB | 1111 | 4GB |

### 3. Cache/Memory Operational Functions

### 3.1. Weak Write Ordering

In strong write ordering, the processor guarantees that the order of writes seen by the core when referencing the cache is identical under all circumstances to the order of writes seen on the processor external bus. In weak write ordering, the processor core is permitted to update its internal cache with write data before that write data is guaranteed to have been accepted by the external bus. Under certain external snoop with invalidate conditions, the write data in the cache may appear on the bus before data from an earlier issued write, which has the effect of changing the order of the writes as far as the external bus is concerned. In most situations, this condition is not important and since weak write ordering allows for some performance optimizations, weak write ordering is usually advantageous. If the current address is contained by multiple memory regions, strong write ordering will be used if any one of the regions specifies strong write ordering.

### 3.2. Weak Locks

A microprocessor requesting a locked memory access has exclusive control of the bus during the memory access. However, a locked operation requires a considerable number of clocks to synchronize the write buffers and force the read and the write of the locked read-modify-write to the external bus. Thus, it can have a very negative impact on performance. In some situations, such as multiprocessor systems, locks may be necessary to avoid memory conflicts. A "strong" lock uses bus locking, i.e., the bus cycle is issued with LOCK# signal asserted. With "weak" locks, the bus cycle is issued with LOCK# signal negated. If the current address is contained by multiple memory regions, strong locks will be used if any one of the regions specifies strong locks.

### 3.3. No Lock

In place of (or in addition to) the regional strong/weak locking modes of operation, a NO_LOCK bit can be provided for selectively negating the LOCK# signal, such that all bus cycles are issued with the LOCK# signal negated except page table accesses. The advantage of the NO_LOCK signal is that many single processor systems can be designed such that bus locking is not a concern. The NO_LOCK bit allows bus locking to be turned off (typically by the BIOS) in order to achieve better performance. The NO_LOCK bit can be part of one of the control registers, such as CCR1.

### 3.4. Write Gathering

Under write gathering, contiguous, non-overlapping, sequential writes to the same word are gathered into a single write (in some embodiments, it may be useful to gather non-contiguous, overlapping writes as well) . For example, for a 64-bit word, up to eight bytes may be gathered into a single write which should significantly reduce bus traffic, particularly if the processor is in write-through cache mode. Write gathering has a lesser, but still positive, effect in write back mode. If the current address is contained by multiple memory regions, write gathering will not be used if any one of the regions specifies no write gathering. Write gathering is sometimes referred to as "write collecting" or "write collapsing."

### 3.5. Other Functions

While the region configuration system 40 has been illustrated herein with five specified operational functions which can be applied to regions of the addressable memory space, other operational functions could be used in connection with or in place of these modes. For example, cache write protocols (write-back or write-through), write allocations, read order, and so on could similarly be applied regionally.

### 4. Conclusion

The region configuration system described herein presents significant advantages over the prior art. First, operational function modes which are generally desirable can be used in specified regions to avoid problems which may occur in other regions. The operational functions modes can be customized to accommodate different computer architectures. For example. a multiprocessor computer system may need greater protection for memory accesses than a single processor computer system. Any number of operational function modes and any number of regions can provided by expansion of the circuit described herein.

Although the Detailed Description of the invention has been directed to certain exemplary embodiments, various modifications of these embodiments, as well as alternative embodiments, will be suggested to those skilled in the art. For example, the manner of storing and selecting attributes may vary without affecting the applicability of the invention. It will be appreciated that modifications or alternative embodiments are possible within the scope of the invention.

## Claims

1. A microprocessor (10) including a memory control system (12; 40) for issuing physical memory addresses to control access to a memory external to said microprocessor (10) via a bus external to said microprocessor, and a bus interface (16) for providing access to said external bus, the memory control system (12; 40) comprising:
memory region means (42) for defining a plurality of memory regions for said external memory (14), a said memory region being definable independently of other memory regions as to physical memory base address and block size and having associated plural-mode operational functions, said plural-mode operational functions having operational function attributes with values selectable for defining modes of said plural-mode operational functions; and
access control signal determining means (48, 50, 52) for determining whether a current physical memory address is in the address space of one or more of said memory regions and, if so, for outputting access control signals for use by said microprocessor (10) to initiate access to said external memory, said access control signals including attribute values derived from the respective operational function attribute values for said plural mode operational functions associated with said one memory region or each of said memory regions containing the current physical address and permitting non-write protected, non-cacheable external memory access with write gathering.

2. A microprocessor according to Claim 1, including selection means (RCR0-RCR2) for selecting an operational function attribute for each of said memory regions.

3. A microprocessor according to Claim 1 or Claim 2, wherein each of said plural-mode operational functions has a respective operational function attribute.

4. A microprocessor according to any preceding Claim, wherein each of said memory regions has operational function attributes which specify respective modes of a plurality of said plural-mode operational functions.

5. A microprocessor according to Claim 1, including means for selectively enabling the mode of any of a plurality of said plural-mode operational functions associated with each of said memory regions by specifying the operational function attributes individually in each such region.

6. A microprocessor according to any of Claims 1-5, wherein for each of said memory regions, the physical memory base address is definable independently of the block size.

7. A microprocessor according to any of Claims 1-6, wherein said memory regions overlap at least in part.

8. A microprocessor according to Claim 7, wherein in response to detecting the current physical memory address in more than one of said overlapping memory regions, the address control means generates an access control signal based on the or each most restrictive operational function mode.

9. A computer, system comprising a microprocessor according to any of Claims 1-8 coupled to said external memory (14) via an external bus for receiving physical addresses from the microprocessor to initiate a memory access.

10. A method of controlling access by a microprocessor (10) in a computer system to a memory (14) external of the microprocessor via a bus external to said microprocessor, the method comprising:
(a) defining a plurality of memory regions for said external memory (14), a said memory region being definable independently of other memory regions as to physical memory base address and block size and having associated plural-mode operational functions, said plural-mode operational functions having operational function attributes with values selectable for defining modes of said plural-mode operational functions; and
(b) determining, in an access control signal determining means, whether a current physical memory address is in the address space of one or more of said memory regions and, if so, outputting access control signals for use by said microprocessor (10) to initiate access to said external memory, said access control signals including attribute values derived from the respective operational function attribute values for said plural mode operational functions associated with said one memory region or each of said memory regions containing the current physical address, wherein said access control signal generating means permits non-write protected, non-cacheable external memory access with write gathering.

11. A method according to Claim 10, wherein each of said plural-mode operational functions has a respective operational function attribute.

12. A method according to Claim 10 or Claim 11, wherein each of the memory regions has operational function attributes which specify respective modes of a plurality of said plural-mode operational functions

13. A method according to Claim 10, wherein each of the memory regions is associated with a plurality of said plural-mode operational functions, and the operational function attributes are specified individually for each said memory region.

14. A method according to any of Claims 10-13, wherein for each of said memory regions, the physical memory base address is definable independently of the block size.

15. A method according to any of Claims 10-14, wherein said memory regions overlap at least in part.

16. A method according to Claim 15, wherein in said step (b) if a current physical memory address is contained in more than one of said overlapping memory regions, an access control signal is generated based on the most restrictive mode specified by an operational function attribute for the or each operational function.

## Patentansprüche

1. Ein Mikroprozessor (10), der ein Speichersteuersystem (12; 40) zum Ausgeben von physikalischen Speicheradressen aufweist, um den Zugriff auf einen Speicher, der zu dem Mikroprozessor (10) extern ist, über einen Bus, der zu dem Mikroprozessor extern ist, zu steuern, und eine Busschnittstelle (16) zum Bereitstellen von Zugriff auf den externen Bus, wobei das Speichersteuersystem (12; 40) aufweist:
eine Speicherbereichseinrichtung (42) zum Definieren einer Vielzahl von Speicherbereichen für den externen Speicher (14), wobei ein besagter Speicherbereich unabhängig von den anderen Speicherbereichen definierbar ist, was die physikalische Speicherbasisadresse und die Blockgröße anbelangt, und assoziierte Mehrfachbetriebsart-Operationsfunktionen besitzt, wobei die Mehrfachbetriebsart-Operationsfunktionen Operationsfunktionsattribute mit Werten besitzen, die ausgewählt werden können, um Betriebsarten der Mehrfachbetriebsart-Operationsfunktionen zu definieren; und
eine Zugriffssteuersignalbestimmungseinrichtung (48, 50, 52) zum Bestimmen, ob eine momentane physikalische Speicheradresse in dem Adreßraum von einem oder mehreren der Speicherbereiche ist, und, falls dies der Fall ist, zum Ausgeben von Zugriffssteuersignalen zur Verwendung durch den Mikroprozessor (10), um einen Zugriff auf den externen Speicher zu initiieren, wobei die Zugriffssteuersignale Attributwerte aufweisen, die von den jeweiligen Operationsfunktionsattributwerten für die Mehrfachbetriebsart-Operationsfunktionen abgeleitet sind, die mit dem besagten einen Speicherbereich oder jedem der Speicherbereiche assoziiert sind, die die momentane physikalische Adresse enthalten, und Gestatten eines nicht-schreibgeschützten, nicht-cachebaren externen Speicherzugriffs mit Sammeln von Schreibvorgängen.

2. Ein Mikroprozessor nach Anspruch 1, der eine Auswahleinrichtung (RCR0-RCR2) zum Auswählen eines Operationsfunktionsattributs für jeden der Speicherbereiche aufweist.

3. Ein Mikroprozessor nach Anspruch 1 oder Anspruch 2, dadurch gekennzeichnet, daß jede der Mehrfachbetriebsart-Operationsfunktionen ein entsprechendes Operationsfunktionsattribut besitzt.

4. Ein Mikroprozessor nach einem der vorhergehenden Ansprüche, dadurch gekennzeichnet, daß jeder der Speicherbereiche Operationsfunktionsattribute besitzt, die entsprechende Betriebsarten aus einer Vielzahl der Mehrfachbetriebsart-Operationsfunktionen spezifizieren.

5. Ein Mikroprozessor nach Anspruch 1, der eine Einrichtung aufweist, um die Betriebsart irgendeiner aus einer Vielzahl der Mehrfachbetriebsart-Operationsfunktionen, die mit jedem der Speicherbereiche assoziiert sind, selektiv durch individuelles Spezifizieren der Operationsfunktionsattribute in jedem solchen Bereich aufzurufen.

6. Ein Mikroprozessor nach einem der Ansprüche 1 bis 5, dadurch gekennzeichnet, daß für jeden der Speicherbereiche die physikalische Speicherbasisadresse unabhängig von der Blockgröße definierbar ist.

7. Ein Mikroprozessor nach einem der Ansprüche 1 bis 6, dadurch gekennzeichnet, daß die Speicherbereiche wenigstens teilweise überlappen.

8. Ein Mikroprozessor nach Anspruch 7, dadurch gekennzeichnet, daß als Reaktion auf das Detektieren der momentanen physikalischen Speicheradresse in mehr als einem der überlappenden Speicherbereiche die Adressensteuereinrichtung ein Zugriffssteuersignal auf der Basis der oder jeder am meisten einschränkenden Operationsfunktionsbetriebsart erzeugt.

9. Ein Computersystem mit einem Mikroprozessor nach einem der Ansprüche 1 bis 8, der mit dem externen Speicher (14) über einen externen Bus zum Empfangen physikalischer Adressen von dem Mikroprozessor gekoppelt ist, um einen Speicherzugriff zu initiieren.

10. Ein Verfahren zum Steuern des Zugriffs mittels eines Mikroprozessors (10) in einem Computersystem auf einen Speicher (14) außerhalb des Mikroprozessors über einen Bus, der zum dem Mikroprozessor extern ist, wobei das Verfahren aufweist:
(a) Definieren einer Vielzahl von Speicherbereichen für den externen Speicher (14), wobei ein besagter Speicherbereich unabhängig von den anderen Speicherbereichen definierbar ist, was die physikalische Speicherbasisadresse und die Blockgröße anbelangt, und assoziierte Mehrfachbetriebsart-Operationsfunktionen besitzt, wobei die Mehrfachbetriebsart-Operationsfunktionen Operationsfunktionsattribute mit Werten besitzen, die ausgewählt werden können, um Betriebsarten der Mehrfachbetriebsart-Operationsfunktionen zu definieren; und
(b) Bestimmen, in einer Zugriffssteuersignalbestimmungseinrichtung, ob eine momentane physikalische Speicheradresse in dem Adreßraum von einem oder mehreren der Speicherbereiche ist, und, falls dies der Fall ist, zum Ausgeben von Zugriffssteuersignalen zur Verwendung durch den Mikroprozessor (10), um einen Zugriff auf den externen Speicher zu initiieren, wobei die Zugriffssteuersignale Attributwerte aufweisen, die von den jeweiligen Operationsfunktionsattributwerten für die Mehrfachbetriebsart-Operationsfunktionen abgeleitet sind, die mit dem besagten einen Speicherbereich oder jedem der Speicherbereiche assoziiert sind, die die momentane physikalische Adresse enthalten, wobei die Zugriffssteuersignalerzeugungseinrichtung einen nicht-schreibgeschützten, nicht-cachebaren externen Speicherzugriff mit Sammeln von Schreibvorgängen gestattet.

11. Ein Verfahren nach Anspruch 10, dadurch gekennzeichnet, daß jede der Mehrfachbetriebsart-Operationsfunktionen ein entsprechendes Operationsfunktionsattribut besitzt.

12. Ein Verfahren nach Anspruch 10 oder Anspruch 11, dadurch gekennzeichnet, daß jeder der Speicherbereiche Operationsfunktionsattribute besitzt, die entsprechende Betriebsarten aus einer Vielzahl der Mehrfachbetriebsart-Operationsfunktionen spezifizieren.

13. Ein Verfahren nach Anspruch 10, dadurch gekennzeichnet, daß jeder der Speicherbereiche mit einer Vielzahl der Mehrfachbetriebsart-Operationsfunktionen assoziiert ist und die Operationsfunktionsattribute für jeden Speicherbereich individuell spezifiziert werden.

14. Ein Verfahren nach einem der Ansprüche 10 bis 13, dadurch gekennzeichnet, daß für jeden der Speicherbereiche die physikalische Speicherbasisadresse unabhängig von der Blockgröße definierbar ist.

15. Ein Verfahren nach einem der Ansprüche 10 bis 14, dadurch gekennzeichnet, daß die Speicherbereiche wenigstens teilweise überlappen.

16. Ein Verfahren nach Anspruch 15, dadurch gekennzeichnet, daß in dem Schritt (b), falls eine momentane physikalische Speicheradresse in mehr als einem der überlappenden Speicherbereiche enthalten ist, ein Zugriffssteuersignal auf der Basis der durch ein Operationsfunktionsattribut spezifizierten, am meisten einschränkenden Betriebsart für die oder jede Operationsfunktion erzeugt wird.

## Revendications

1. Microprocesseur (10) incluant un système de gestion de mémoire (12 ; 40) pour émettre des adresses physiques de mémoire pour commander l'accès à une mémoire externe audit microprocesseur (10) via un bus externe audit microprocesseur, et une interface de bus (16) pour fournir l'accès audit bus externe, le système de gestion de mémoire (12 ; 40) comprenant :
un moyen de définition de régions de mémoire (42) pour définir une pluralité de régions de mémoire pour ladite mémoire externe (14), l'une desdites régions de mémoire pouvant être définie indépendamment des autres régions de mémoire en ce qui concerne l'adresse physique de base de mémoire et la taille de bloc et ayant des fonctions opérationnelles à plusieurs modes associées, lesdites fonctions opérationnelles à plusieurs modes ayant des attributs de fonction opérationnelle avec des valeurs pouvant être choisies pour définir des modes desdites fonctions opérationnelles à plusieurs modes ; et
un moyen de détermination de signal de commande d'accès (48, 50, 52) pour déterminer si une adresse physique de mémoire courante se trouve dans l'espace d'adresse d'une ou plusieurs desdites régions de mémoire et, s'il en est ainsi, pour émettre des signaux de commande d'accès destinés à être utilisés par ledit microprocesseur (10) pour amorcer l'accès à ladite mémoire externe, lesdits signaux de commande d'accès incluant des valeurs d'attributs dérivées des valeurs d'attributs de fonction opérationnelle respectives pour lesdites fonctions opérationnelles à plusieurs modes associées à ladite première région de mémoire ou à chacune desdites régions de mémoire contenant l'adresse physique courante et permettant l'accès à la mémoire externe non protégée en écriture sans possibilité de mise en cache avec groupement d'écriture.

2. Microprocesseur selon la revendication 1, incluant un moyen de sélection (RCR0-RCR2) pour sélectionner un attribut de fonction opérationnelle pour chacune desdites régions de mémoire.

3. Microprocesseur selon la revendication 1 ou la revendication 2, dans lequel chacune desdites fonctions opérationnelles à plusieurs modes porte un attribut de fonction opérationnelle respectif.

4. Microprocesseur selon l'une quelconque des revendications précédentes, dans lequel chacune desdites régions de mémoire comporte des attributs de fonction opérationnelle qui spécifient les modes respectifs d'une pluralité desdites fonctions opérationnelles à plusieurs modes.

5. Microprocesseur selon la revendication 1, incluant un moyen pour valider de manière sélective le mode de l'une quelconque d'une pluralité desdites fonctions opérationnelles à plusieurs modes associées à chacune desdites régions de mémoire en spécifiant les attributs de fonction opérationnelle individuellement dans chacune de ces régions.

6. Microprocesseur selon l'une quelconque des revendications 1 à 5, dans lequel pour chacune desdites régions de mémoire, l'adresse physique de base de mémoire peut se définir indépendamment de la taille de bloc.

7. Microprocesseur selon l'une quelconque des revendications 1 à 6, dans lequel lesdites régions de mémoire se chevauchent au moins partiellement.

8. Microprocesseur selon la revendication 7, dans lequel en réponse à la détection de l'adresse physique courante de mémoire dans plus d'une desdites régions de mémoire se chevauchant, le moyen de commande d'adresse génère un signal de commande d'accès en se basant sur le mode, ou chaque mode, de fonction opérationnelle le plus restrictif.

9. Système informatique comprenant un microprocesseur selon l'une quelconque des revendications 1 à 8, couplé à ladite mémoire externe (14) via un bus externe pour recevoir des adresses physiques à partir du microprocesseur afin de déclencher un accès mémoire.

10. Méthode pour commander l'accès par un microprocesseur (10) d'un système informatique à une mémoire (14) externe du microprocesseur via un bus externe audit microprocesseur, la méthode comprenant les étapes consistant à :
(a) définir une pluralité de régions de mémoire pour ladite mémoire externe (14), l'une desdites régions de mémoire pouvant être définie indépendamment des autres régions de mémoire en ce qui concerne l'adresse physique de base de mémoire et la taille de bloc et ayant des fonctions opérationnelles à plusieurs modes associées, lesdites fonctions opérationnelles à plusieurs modes ayant des attributs de fonction opérationnelle avec des valeurs pouvant être choisies pour définir les modes desdites fonctions opérationnelles à plusieurs modes ; et
(b) déterminer, dans un moyen de détermination de signal de commande d'accès, si une adresse physique de mémoire courante se trouve dans l'espace d'adresse de l'une ou plusieurs desdites régions de mémoire et, s'il en est ainsi, émettre des signaux de commande d'accès destinés à être utilisés par ledit microprocesseur (10) pour déclencher un accès à ladite mémoire externe, lesdits signaux de commande d'accès incluant des valeurs d'attributs dérivées des valeurs d'attributs de fonction opérationnelle respective pour lesdites fonctions opérationnelles à plusieurs modes associées à ladite région de mémoire ou à chacune desdites régions de mémoire contenant l'adresse physique courante, ledit moyen de génération de signal de commande d'accès permettant un accès à la mémoire externe non protégée en écriture sans possibilité de mise en cache avec regroupement d'écriture.

11. Méthode selon la revendication 10, dans laquelle chacune desdites fonctions opérationnelles à plusieurs modes comporte un attribut de fonction opérationnelle respectif.

12. Méthode selon la revendication 10 ou la revendication 11, dans laquelle chacune des régions de mémoire comporte des attributs de fonction opérationnelle qui spécifient les modes respectifs d'une pluralité desdites fonctions opérationnelles à plusieurs modes.

13. Méthode selon la revendication 10, dans laquelle chacune des régions de mémoire est associée à une pluralité desdites fonctions opérationnelles à plusieurs modes, et les attributs de fonction opérationnelle sont spécifiés pour chacune desdites régions de mémoire.

14. Méthode selon l'une quelconque des revendications 10 à 13, dans laquelle pour chacune desdites régions de mémoire, l'adresse physique de base de mémoire peut être définie indépendamment de la taille de bloc.

15. Méthode selon l'une quelconque des revendications 10 à 14, dans laquelle lesdites régions de mémoire se chevauchent au moins partiellement.

16. Méthode selon la revendication 15, dans laquelle, à ladite étape (b), si une adresse physique de mémoire courante est contenue dans plus d'une desdites régions de mémoire se chevauchant, un signal de commande d'accès est généré sur la base du mode le plus restrictif spécifié par un attribut de fonction opérationnelle pour la, ou chaque, fonction opérationnelle.
